# EUROPEAN PATENT APPLICATION

(11) **EP 2 495 788 A2**
(43) Date of publication of application: **05.09.2012**
(21) Application number: 11188492.0
(22) Date of filing: 09.11.2011
(51) Int. Cl.: H01M 4/1397, H01M 4/136, H01M 4/62, H01M 4/58

(54) **Positive electrode active material for lithium secondary battery, method of preparing same and lithium secondary battery including same**

(30) Priority: 02.03.2011 US 448566 P; 23.09.2011 US 243229
(71) Applicant: Samsung SDI Co., Ltd., Yongin-si, Gyeonggi-do (KR)
(72) Inventor: Park, Han-Eol, Gyeonggi-do (KR); Kwon, Sun-Hwa, Gyeonggi-do (KR); Kim, Ji-Hyun, Gyeonggi-do (KR); Kim, Ki-Hyun, Gyeonggi-do (KR); You, Yong-Chan, Gyeonggi-do (KR); Kim, Yoon-Chang, Gyeonggi-do (KR)
(74) Representative: Sampson, Eimear

(57) **Abstract**

A positive active material for a lithium secondary battery, a method of preparing the same, and a lithium secondary battery including the same. The positive active material has a carbon sheet having a structure including 1 to 200 polycyclic nanosheets, each nanosheet comprising a plurality of hexagonal rings each having six carbon atoms condensed and substantially aligned in a plane containing the hexagonal rings, the polycyclic nanosheets layered in a vertical direction to the plane containing the hexagonal rings; and particles of an olivine-based compound disposed on the surface of the carbon sheet.

## Description

The present invention relates to a positive active material for a lithium secondary battery, a method of preparing the same, and a lithium secondary battery including the same.

As electronic equipment recently tends to be lighter and reduced in size, portable electronic devices have been widely used. Accordingly, research is underway on a lithium secondary battery with high energy density as a power source for portable electronic devices.

Lithium secondary batteries include a material that reversibly intercalates or deintercalates lithium ions during charge and discharge reactions as both positive and negative active materials, and an organic electrolyte or a polymer electrolyte between the positive and negative electrodes. Batteries generate electrical power using an electrochemical reaction material at positive and negative electrodes.

As for negative active materials for a lithium secondary battery, lithium metals have been used. However, the lithium metal may form dendrites and thus, cause a short circuit and possibly explode the battery. Accordingly, the lithium metals have been replaced with carbon-based materials such as amorphous carbon, crystalline carbon, or the like. In particular, graphite (BOC) coated with boron has been recently suggested to increase capacity of a carbon-based material.

As for positive active materials of a lithium secondary battery, there has been research conducted on lithium-transition element composite oxides that can intercalate lithium, such as LiCoO₂, LiMn₂O₄, LiNi₁₋ₓCoₓO₂ (0<x<1), and so on. Among the positive active materials, Mn-based positive active materials such as LiMn₂O₄, LiMnO₂, and the like may be easily synthesized, are relatively inexpensive and environmentally-friendly, but have small capacity. LiCoO₂ has good electrical conductivity, high battery voltage, and excellent electrode performance and has been made commercially available (by Sony Co., Ltd. and the like) but the costs of LiCoO₂ are high. LiNiO₂ is the most inexpensive among the positive active materials and has the highest discharge capacity, but is the hardest to synthesize.

Therefore, research on a positive active material for a lithium secondary battery has been performed in order to develop a material that can replace LiCoO₂ and which is stable at a voltage of 4.2V or higher, and that has both high energy density and excellent cycle-life.

According to a first aspect of the present invention, a positive active material for a lithium secondary battery is provided that includes a carbon sheet having a structure including from 1 to 200 polycyclic nanosheets comprising a plurality of hexagonal rings each having six carbon atoms wherein the hexagonal rings are condensed and substantially aligned in a plane containing the hexagonal rings, wherein the polycyclic nanosheets are layered in a direction perpendicular to the plane containing the hexagonal rings; and particles of an olivine compound disposed on the surface of the carbon sheet.

The olivine-based compound particles include a compound represented by the following Chemical Formula 1.

LiₓM_{z}PO₄ [Chemical Formula 1]

In Chemical Formula 1, 0<x≤2, 0.8≤z≤1.2, M is at least one elected from the group consisting of Sc, Ti, V, Cr, Mn, Fe, Co, Ni, Cu, or a combination thereof.

In an embodiment, M is at least one selected from the group consisting of Fe, Mn, Co, Ni, Cu, or a combination thereof.

The positive active material may comprise the carbon sheet in an amount from about 1 wt% to about 15 wt% of the positive active material.

The carbon sheet and the olivine compound particles may share at least one lattice phase.

According to a second aspect of the present invention, a lithium secondary battery includes a positive electrode including a positive active material according to the invention in its first aspect; a negative electrode including a negative active material; a separator; and an electrolyte.

According to a third aspect of the present invention, a method of preparing the positive active material according to the invention in its first aspect includes: mixing a carbon sheet with an Li source material, an M source material, and a P source material with a solvent to form a mixed solution; wherein the carbon sheet has a structure comprising from 1 to 200 polycyclic nanosheets comprising a plurality of hexagonal rings each having six carbon atoms, wherein the hexagonal rings are condensed and substantially aligned in a plane containing the hexagonal rings, wherein the polycyclic nanosheets are layered in a direction perpendicular to the plane containing the hexagonal rings;
growing olivine compound particles on the surface of the carbon sheet in a liquid method, and
heat-treating the olivine compound particles under a reduction atmosphere; wherein the olivine compound particles comprise a compound represented by the following Chemical Formula 1:

LiₓM_{z}PO₄ [Chemical Formula 1]

wherein 0<x≤2, 0.8≤z≤1.2, and M is at least one selected from the group consisting of Sc, Ti, V, Cr, Mn, Fe, Co, Ni, Cu, or a combination thereof.

That is, the method includes adding a carbon sheet and Li, M, and P source materials for an olivine-based compound to a solvent and forming olivine-based compound particles on the surface of the carbon sheet using a liquid method. Herein, the carbon sheet is made by laminating 1 to 200 polycyclic nanosheets comprising a plurality of hexagonal rings each having six carbon atoms condensed and substantially aligned in a plane containing the hexagonal rings, in a vertical direction to the plane containing the hexagonal rings.

The mixed solution may include about 3 parts by weight to about 6 parts by weight of the Li source material, about 30 parts by weight to about 40 parts by weight of the M source material, and about 18 parts by weight to about 20 parts by weight of the P source material.

The heat-treatment is performed under a reducing atmosphere.

The heat-treatment may be performed at about 400 to about 800°C.

The heat-treatment may be performed for about 5 to about 10 hours.

According to a fourth aspect of the present invention there is provided use of a positive active material according to the invention in its first aspect in a positive electrode of a lithium secondary battery.

A positive active material for a lithium secondary battery according to the invention may have improved conductivity. A lithium secondary battery including the positive active material may show improved initial charge and discharge capacity and high rate performance.

A more complete appreciation of the present invention, and many of the attendant advantages thereof, will be readily apparent as the same becomes better understood by reference to the following detailed description when considered in conjunction with the accompanying drawings, wherein:
Figure 1 schematically shows super-conductive nanoparticles according to an embodiment of the present invention;
Figure 2 is a schematic diagram enlarging a circular part T₁ marked with a dotted line in Figure 1 enlarged to a molecular level;
Figure 3 shows the structure of a lithium secondary battery according to an embodiment of the present invention;
Figures 4 to 6 are SEM photographs (at different magnifications) of the positive active material according to Example 1; and
Figure 7 is the charge and discharge graph of the battery according to Example 1.

Example embodiments will hereinafter be described in detail. However, these embodiments are only examples, and the present embodiments are not limited thereto.

The positive active material for a lithium secondary battery includes a carbon sheet having a structure including 1 to 200 polycyclic nanosheets comprising a plurality of hexagonal rings each having six carbon atoms condensed and substantially aligned in a plane containing the hexagonal rings, the polycyclic nanosheets layered in a vertical direction to the plane containing the hexagonal rings; and particles of an olivine-based compound disposed on the surface of the carbon sheet.

Nucleation of the olivine-based compound particles takes place on the lattice phase of the carbon sheet, and thus the carbon sheet and the olivine-based compound particle can share at least one lattice phase. The 'lattice phase' indicates a surface passing three lattice points that do not exist in one line. Since the carbon sheet and the olivine-based compound particle share at least one lattice phase in this way, they have a stable and strong bond. Such a strong bond can be formed because interface energy of the carbon sheet may be used for nucleation of the olivine-based compound particle.

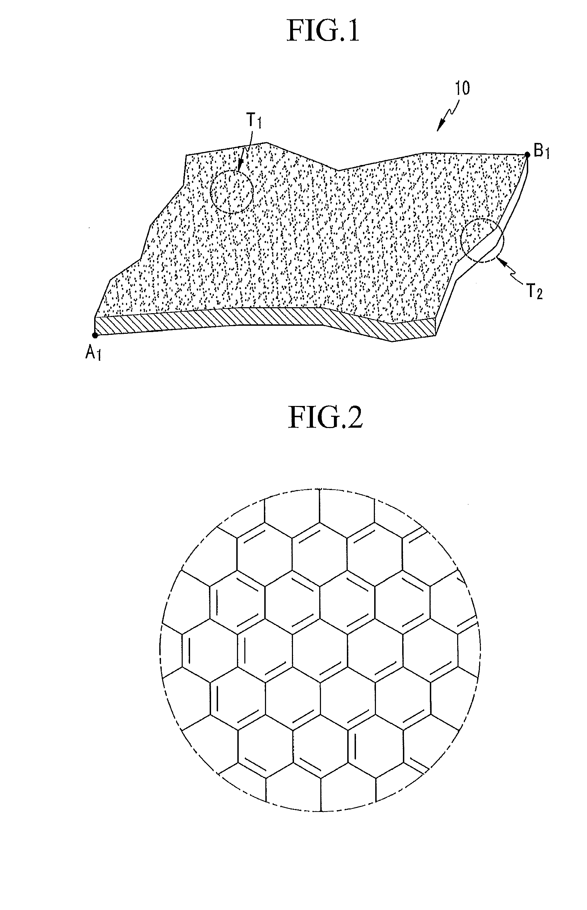

Figure 1 is a schematic diagram of a carbon sheet 10. The carbon sheet 10 may have an irregular shape, or made be bent, rolled at the end, and the like, but typically has a plate or planar shape.

In the specification, "a hexagonal ring having six carbon atoms" indicates a cyclic hexagon having a carbon at each vertex. Hereinafter, the cyclic hexagon is referred to be "a 6-membered carbon ring."

The polycyclic nanosheet has a plurality of 6-membered carbon rings. The 6-membered carbon rings are fused one another and arranged into a honeycomb shape substantially in a plane. Herein, the expression "substantially aligned in a plane" indicates that a plurality of 6-membered carbon rings are condensed side by side to be arranged and extended, but does not include 6-membered carbon rings that are condensed vertically to be aligned and extended. The expression "are condensed and substantially aligned in a plane" can be easily understood by referring to Figure 2, in which a circular part T₁ marked with a dotted line in Figure 1, is enlarged to a molecular level. Referring to Figure 2, a plurality of the 6-membered carbon rings are condensed into a honeycomb structure without space between the 6-membered carbon rings and are thus aligned and extended side by side. In Figure 2, the 6-membered carbon ring includes a carbon at each vertex, which can be easily understood by a person of an ordinary skill in the art.

In the polycyclic nanosheet, the neighboring carbons are connected through a sp² bond. Accordingly, the 6-membered carbon ring has a resonance structure, so that electrons may easily move therein.

Since the polycyclic nanosheet has a structure in which a plurality of 6-membered carbon rings are condensed and aligned in a plane, the polycyclic nanosheet, for example, has a thickness of from about 0.846 nm to about 1.154 nm. Herein, the polycyclic nanosheet has a thickness deviating slightly from the diameter of a carbon atom because the polycyclic nanosheet may be bent or rolled up at the end or partially defected.

The carbon sheet 10 may have a structure including the laminated 1 to 200 polycyclic nanosheets as mentioned above. Herein, the 1 to 200 polycyclic nanosheets are laminated in a vertical direction to the plane of the 6 carbon-membered hexagonal rings. Since the carbon sheet may have excellent conductivity due to the structure, the positive active material including this carbon sheet may also have excellent conductivity. In addition, since the carbon sheet has relatively low density, it may have a bigger surface area than other materials with high density. Accordingly, the carbon sheet may have a bigger contact area with olivine compound particles and thus, further improve electrical conductivity.

The olivine compound particle includes a compound represented by the following Chemical Formula 1.

LiₓM_{z}PO₄ [Chemical Formula 1]

In Chemical Formula 1, 0<x≤2, 0.8≤z≤1.2, M is Sc, Ti, V, Cr, Mn, Fe, Co, Ni, Cu, or a combination thereof. M may be selected from Fe, Mn, Co, Ni, Cu, or a combination thereof.

The positive active material may comprise the carbon sheet in an amount from about 1 wt% to about 15 wt% of the positive active material. When the carbon sheet is included within this range, it may have improved high rate performance and maintain active mass density due to conductivity of the carbon sheet.

According to another aspect, provided is a method of preparing a positive active material for a lithium secondary battery which includes mixing a carbon sheet with at least one of an Li source material, an M source material, and a P source material, and with a solvent to form a mixed solution; growing olivine compound particles on the surface of the carbon sheet using a liquid method, and heat-treating the olivine compound particles under a reduction atmosphere. The carbon sheet has a structure comprising from 1 to 200 polycyclic nanosheets. Each polycyclic nanosheet is formed of carbon atom rings condensed and aligned in a plane, and the ring is formed of 6 carbon atoms connected into a hexagon.

LiₓM_{z}PO₄ [Chemical Formula 1]

In Chemical Formula 1, 0<x≤2, 0.8≤z≤1.2, and M is Sc, Ti, V, Cr, Mn, Fe, Co, Ni, Cu, or a combination thereof. M may be selected from Fe, Mn, Co, Ni, Cu, or a combination thereof.

The liquid method may include, in particular, a precipitation method, a hydrolysis method, a solvent-evaporation method, a sol-gel method, a co-precipitation method, a hydrothermal synthesis method, and the like but is not limited thereto. For example, the positive active material for a lithium secondary battery may be prepared in a co-precipitation method.

The manufacturing method may provide the aforementioned positive active material for a lithium secondary battery. In the manufacturing method, the nucleation of the olivine compound particles may take an advantage of interface energy of the carbon sheets so that the nucleus of the olivine compound particles may be formed on the lattice phase of a carbon sheet. As a result, the carbon sheet and the olivine compound particles may share at least one lattice phase.

In addition, the carbon sheet has relatively low density and thus, a bigger surface area compared with other materials with bigger density. In other words, the carbon sheet has a bigger contact area with olivine compound particles and thus, much improved electrical conductivity.

The Li source material of an olivine compound may include acetate, nitrate, sulfate, carbonate, citrate, phthalate, perchlorate, acetylacetonate, acrylate, formate, oxalate, halide, oxyhalide, boride, oxide, sulfide, peroxide, alkoxide, hydroxide, ammonium, hydrates thereof, or a combination thereof, which contain Li.

The Li source material may be included in an amount ranging from about 3 parts by weight to about 6 parts by weight based on total weight of the Li, M, and P source materials.

The M source material may vary depending on kinds of the olivine compound. For example, when M is Fe, a Fe source material such as acetate, nitrate, sulfate, carbonate, citrate, phthalate, perchlorate, acetylacetonate, acrylate, formate, oxalate, halide, oxyhalide, boride, oxide, sulfide, peroxide, alkoxide, hydroxide, ammonium, hydrates thereof, or a combination thereof, which include Fe, may be used.

When M includes Mn, a Mn source material such as acetate, nitrate, sulfate, carbonate, citrate, phthalate, perchlorate, acetylacetonate, acrylate, formate, oxalate, halide, oxyhalide, boride, oxide, sulfide, peroxide, alkoxide, hydroxide, ammonium, hydrates thereof, or a combination thereof, which include Mn, may be used.

The M source material may be easily selected depending on the desired olivine compound by those who have knowledge in the art, and will not be illustrated in further detail.

The M source material may be included in an amount from about 30 parts by weight to about 40 parts by weight based on total weight of Li, M, and P source materials.

The P source material may be selected from phosphoric acid, phosphate, or a combination thereof. The P source material may be included in an amount from about 18 parts by weight to about 20 parts by weight based on total weight of Li, M, and P source materials.

The choice of solvent is not particularly limited but may include any solvent producing the olivine compound particles on the surface of the carbon sheet. For example, the solvent may include pure distilled water.

The particles grown in the liquid method may be additionally dried and heat-treated under a reduction atmosphere. When the particles are heat-treated under the reduction atmosphere, Fe may be prevented from oxidation at a high temperature.

The heat treatment may be performed at a temperature ranging from about 400 to about 800°C. Since particles no longer grow within this temperature range, the small particles can improve conductivity.

The heat-treatment may be performed for about 5 to about 10 hours. When the heat treatment is performed within this time range, the olivine compound may have better crystallinity and improved conductivity, and exhibit no structural changes even after several charges and discharges.

According to another aspect, provided is a lithium secondary battery including a positive electrode including the aforementioned positive active material, a negative electrode including a negative active material, and an electrolyte.

Lithium secondary batteries may be classified as lithium ion batteries, lithium ion polymer batteries, and lithium polymer batteries according to the presence of a separator and the kind of electrolyte used therein. The lithium secondary batteries may have a variety of shapes and sizes, and include cylindrical, prismatic, coin, or pouch-type batteries, and may be thin film batteries or may be rather bulky in size. Structures and fabricating methods for lithium ion batteries pertaining to the present invention are well known in the art.

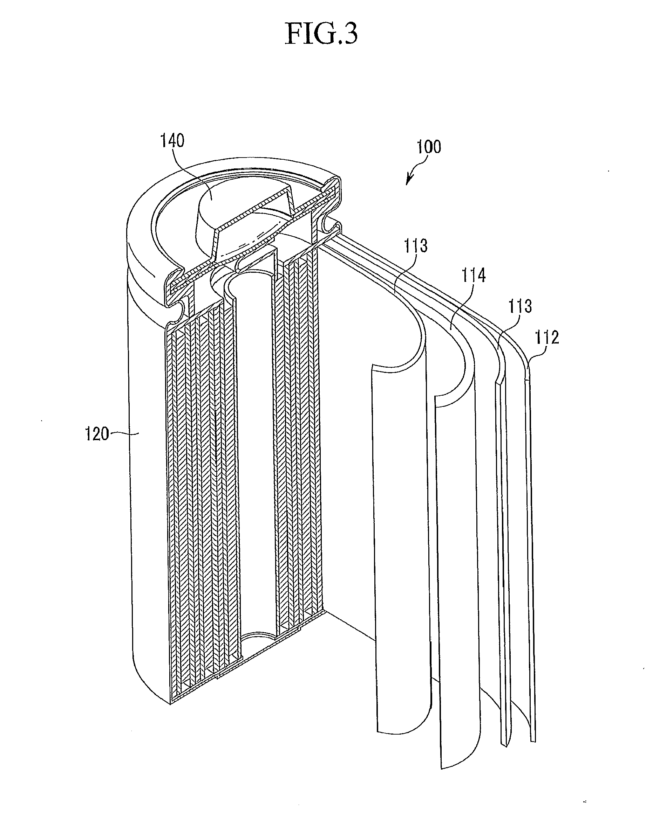

Figure 3 is a schematic view of the structure of a lithium secondary battery. Figure 3 illustrates a cylindrical lithium secondary battery 100, which includes a negative electrode 112, a positive electrode 114, a separator 113 interposed between the negative electrode 112 and the positive electrode 114, an electrolyte (not shown) impregnating the separator 113, a battery case 120, and a sealing member 140 sealing the battery case 120. The negative electrode 112, positive electrode 114, and separator 113 are sequentially stacked, spirally wound, and placed in a battery case 120 to fabricate such a lithium secondary battery 100.

The negative electrode includes a current collector and a negative active material layer disposed thereon. The negative active material layer includes a negative active material.

The negative active material includes a material that reversibly intercalates/deintercalates lithium ions, a lithium metal, a lithium metal alloy, a material being capable of doping and dedoping lithium, or a transition metal oxide.

The material that can reversibly intercalate/deintercalate lithium ions includes a carbon material. The carbon material may be any generally-used carbon-based negative active material in a lithium ion secondary battery. Examples of the carbon material include crystalline carbon, amorphous carbon, and mixtures thereof. The crystalline carbon may be non-shaped, or sheet, flake, spherical, or fiber shaped natural graphite or artificial graphite. The amorphous carbon may be a soft carbon, a hard carbon, mesophase pitch carbonized products, fired coke, and the like.

Examples of the lithium metal alloy include lithium and a metal selected from the group consisting of Na, K, Rb, Cs, Fr, Be, Mg, Ca, Sr, Si, Sb, Pb, In, Zn, Ba, Ra, Ge, Al, and Sn.

Examples of the material being capable of doping lithium include Si, SiOₓ (0 < x < 2), a Si-Q alloy (wherein Q is an element selected from the group consisting of an alkali metal, an alkaline-earth metal, a group 13 element, a group 14 element, a transition element, a rare earth element, and combinations thereof, and is not Si), Sn, SnO₂, a Sn-R alloy (wherein R is an element selected from the group consisting of an alkali metal, an alkaline-earth metal, groups 13 to 16 elements, a transition element, a rare earth element, and combinations thereof and is not Sn), or mixtures thereof. At least one of these materials may be mixed with SiO₂. In addition, carbon may further deposited on the surface of the material being capable of doping lithium. The elements Q and R may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and a combination thereof.

Examples of the transition metal oxide include vanadium oxide, lithium vanadium oxide, and the like.

The negative active material layer includes a binder, and optionally a conductive material.

The binder improves binding properties of negative active material particles with one another and with a current collector. The binder may include a non-water-soluble binder, a water-soluble binder, or a combination thereof.

Examples of the non-water-soluble binder include polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, polyamideimide, polyimide, or a combination thereof.

The water-soluble binder includes a styrene-butadiene rubber, an acrylated styrene-butadiene rubber, polyvinylalcohol, sodium polyacrylate, a copolymer including propylene and a C₂ to C₈ olefin, a copolymer of (meth)acrylic acid and (meth)acrylic acid alkyl ester, or a combination thereof.

When the water-soluble binder is used as a negative electrode binder, a cellulose-based compound may be further used to provide viscosity. The cellulose-based compound includes one or more of carboxymethyl cellulose, hydroxypropylmethyl cellulose, methyl cellulose, or alkaline metal salts thereof. The alkaline metal may be Na, K, or Li. The cellulose-based compound may be included in an amount of about 0.1 to about 3 parts by weight based on 100 parts by weight of the binder.

As for the conductive material, any electro-conductive material that does not cause a chemical change may be used. Examples of the conductive material include a carbon-based material such as natural graphite, artificial graphite, carbon black, acetylene black, ketjen black, and carbon fiber; a metal-based material such as a metal powder or a metal fiber including copper, nickel, aluminum, and silver; a conductive polymer such as a polyphenylene derivative; and a mixture thereof.

The current collector includes a copper foil, a nickel foil, a stainless steel foil, a titanium foil, a nickel foam, a copper foam, a polymer substrate coated with a conductive metal, or combinations thereof.

The positive electrode includes a current collector and a positive active material layer including a positive active material positioned on the current collector. The positive active material is the positive active material described above..

The positive active material layer further includes a binder and a conductive material.

The binder improves binding properties of the positive active material particles to each other and to a current collector. Examples of the binder include at least one selected from the group consisting of polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidenefluoride, polyethylene, polypropylene, styrene-butadiene rubber, acrylated styrene-butadiene rubber, an epoxy resin, nylon, and the like, but is not limited thereto.

The conductive material improves electrical conductivity of a negative electrode. Any electrically conductive material can be used as a conductive agent unless it causes a chemical change. Examples of the conductive material include at least one selected from natural graphite, artificial graphite, carbon black, Super-P^{®} (3M Corp. St. Paul, MN), acetylene black, ketjen black, hard carbon (carbon obtained through sintering at a high temperature), soft carbon (carbon obtained through sintering at a low temperature), carbon fiber, a metal powder or a metal fiber including copper, nickel, aluminum, silver, and the like, polyphenylene derivative, and the like.

The current collector may be aluminium (Al), but is not limited thereto.

The negative and positive electrodes may be fabricated by a method including mixing the active material, a conductive material, and a binder into an active material composition, and coating the composition on a current collector. The electrode manufacturing method is well known, and thus is not described in detail in the present specification. The solvent includes N-methylpyrrolidone and the like, but is not limited thereto.

In the non-aqueous electrolyte secondary battery, the non-aqueous electrolyte includes a non-aqueous organic solvent and a lithium salt.

The non-aqueous organic solvent serves as a medium for transmitting ions taking part in the electrochemical reaction of the battery.

The non-aqueous organic solvent may include a carbonate-based, ester-based, ether-based, ketone-based, alcohol-based, or aprotic solvent. Examples of the carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. Examples of the ester-based solvent may include methyl acetate, ethyl acetate, n-propyl acetate, dimethylacetate, methylpropionate, ethylpropionate, γ-butyrolactone, decanolide, valerolactone, mevalonolactone, caprolactone, and the like. Examples of the ether-based solvent include dibutyl ether, tetraglyme, diglyme, dimethoxyethane, 2-methyltetrahydrofuran, tetrahydrofuran, and the like, and examples of the ketone-based solvent include cyclohexanone and the like. Examples of the alcohol-based solvent include ethyl alcohol, isopropyl alcohol, and the like, and examples of the aprotic solvent include nitriles such as R-CN (where R is a C2 to C20 linear, branched, or cyclic hydrocarbon group having a double bond, an aromatic ring, or an ether bond), amides such as dimethylformamide, dioxolanes such as 1,3-dioxolane, sulfolanes, and the like.

The non-aqueous organic solvent may be used singularly or in a mixture. When the organic solvent is used in a mixture, the mixture ratio can be controlled in accordance with a desirable battery performance.

The carbonate-based solvent may include a mixture of a cyclic carbonate and a linear carbonate. The cyclic carbonate and the chain carbonate are mixed together in the volume ratio of from about 1:1 to about 1:9. When the mixture is used as an electrolyte, the electrolyte performance may be enhanced.

In addition, the non-aqueous organic electrolyte may further include mixtures of carbonate-based solvents and aromatic hydrocarbon-based solvents. The carbonate-based solvents and the aromatic hydrocarbon-based solvents may be mixed together in the volume ratio of about 1:1 to about 30:1.

The aromatic hydrocarbon-based organic solvent may be an aromatic hydrocarbon-based compound represented by the following Chemical Formula 2.

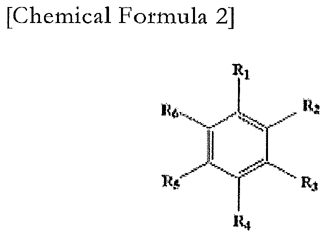

In the above Chemical Formula 2, R₁ to R₆ are independently hydrogen, a halogen, a C1 to C10 alkyl group, a C1 to C10 haloalkyl group, or a combination thereof.

The aromatic hydrocarbon-based organic solvent may include, but is not limited to, at least one selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The non-aqueous electrolyte may further include vinylene carbonate or an ethylene carbonate-based compound of the following Chemical Formula 3.

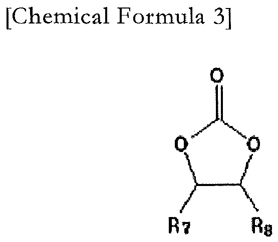

In the above Chemical Formula 3, R₇ and ₈, are independently hydrogen, a halogen, a cyano (CN), a nitro (NO₂), and a Cl to C5 fluoroalkyl, provided that at least one of R₇ and R₈ is a halogen, a cyano (CN), a nitro (NO₂), or a C1 to C5 fluoroalkyl, and R₇ and R₈ are not simultaneously hydrogen.

Examples of the ethylene carbonate-based compound include difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and the like. The use amount of the additive for improving cycle life may be adjusted within an appropriate range.

The lithium salt supplies lithium ions in the battery, operates a basic operation of a lithium secondary battery, and improves lithium ion transportation between positive and negative electrodes. Examples of the lithium salt include at least one supporting salt selected from LiPF₆, LiBF₄, LiSbF₆, LiAsF₆, LiN (SO₂C₂F₅)₂, Li (CF₃SO₂)₂N, LiN (SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂) (where x and y are natural numbers), LiCl, LiI, and LiB(C₂O₄)₂ (lithium bisoxalato borate, LiBOB). The lithium salt may be used in a concentration ranging from about 0.1 M to about 2.0 M. When the lithium salt is included at the above concentration range, electrolyte performance and lithium ion mobility may be enhanced due to optimal electrolyte conductivity and viscosity.

The lithium secondary battery may further include a separator between the negative electrode and the positive electrode, as needed. Examples of suitable separator materials include polyethylene, polypropylene, polyvinylidene fluoride, and multilayers thereof such as a polyethylene/polypropylene double-layered separator, a polyethylene/polypropylene/polyethylene triple-layered separator, and a polypropylene/polyethylene/polypropylene triple-layered separator.

The following examples illustrate this disclosure in more detail. These examples, however, are not in any sense to be interpreted as limiting the scope of this disclosure.

### Preparation Example 1

100g of extended graphite was heated for expansion at 500°C for 1 hour. Then, the gas generated therefrom during the heating was released through the exhauster of an oven. The resulting material was dispersed into ethanol and then ground with a homogenizer at 10,000 rpm for 10 minutes. The acquired mixture was additionally ground with a micro-fluidizer and then, filtrated with a filtering equipment, and washed with ethanol and dried in a 120°C oven, to acquire a carbon sheet powder.

### Example 1

### Preparation of a positive active material

Lithium nitrate as a Li source material, iron sulfate as a Fe source material, diammonium phosphate as a P source material, and the carbon sheet powder prepared according to Preparation Example 1 as a carbon sheet, were mixed in a mole ratio of 15:57:27:2 in pure water as a solvent. The mixture was precipitated in a co-precipitation method, acquiring a suspension solution. The suspension solution was dried to evaporate the solvent and then heat-treated at 700°C for 10 hours under a reduction atmosphere, to prepare a positive active material having lithium iron phosphate (LiFePO₄) on the surface of the carbon sheet.

### Fabrication of a positive electrode

The positive active material prepared in example 1, polyvinylidene fluoride as a binder, and carbon black as a conductive material were mixed in a weight ratio of 90:5:5 in N-methylpyrrolidone as a solvent, to prepare a positive active material layer slurry. The positive active material layer slurry was coated on an Al foil as a positive electrode current collector, fabricating a thin substrate. The thin substrate was dried at about 120°C for 1 hour and compressed, fabricating a positive electrode including a positive active material layer.

### Fabrication of a negative electrode

A negative electrode was fabricated by using a Li foil as a negative active material.

### Fabrication of a lithium secondary battery cell

The positive electrode, the negative electrode, a 20 µm thick polyethylene material separator, and an electrolyte solution were assembled to fabricate a lithium secondary battery cell. Herein, the electrolyte solution was prepared by mixing EC (ethylene carbonate), EMC (ethylmethyl carbonate), and DMC (dimethyl carbonate) in a volume ratio of 3:3:4 with 1.15M of LiPF₆.

### Example 2

A positive electrode for a lithium secondary battery cell was fabricated according to the same method as Example 1 except for using manganese lithium phosphate (LiMnPO₄) as a positive active material, which was prepared by using Manganese sulfate instead of a Fe source material, and diammonium phosphate as the P source material.

The positive electrode for a lithium secondary battery cell was used to fabricate a lithium secondary battery cell according to the same method as Example 1.

### Comparative Example 1

Lithium nitrate as a Li source material, iron sulfate as a Fe source material, and diammonium phosphate as a P source material were mixed in a mole ratio of 15:57:27 in pure water as a solvent. The mixture was primarily heated at 700°C for about 10 hours under reduction atmosphere. The reactant was mixed with sucrose. The mixture was secondarily fired to prepare LiFePO₄ coated with carbon as a positive active material. This positive active material was used to fabricate a positive electrode according to the same method for fabricating a positive electrode as described in Example 1. Then, this positive electrode was used according to the same method for fabricating a lithium secondary battery cell as Example 1 to fabricate a lithium secondary battery cell.

### Comparative Example 2

A lithium secondary battery cell was fabricated according to the same method as Comparative Example 1 except for using manganese as an M source material.

### Experimental Example

### Scanning Electron Microscope (SEM)

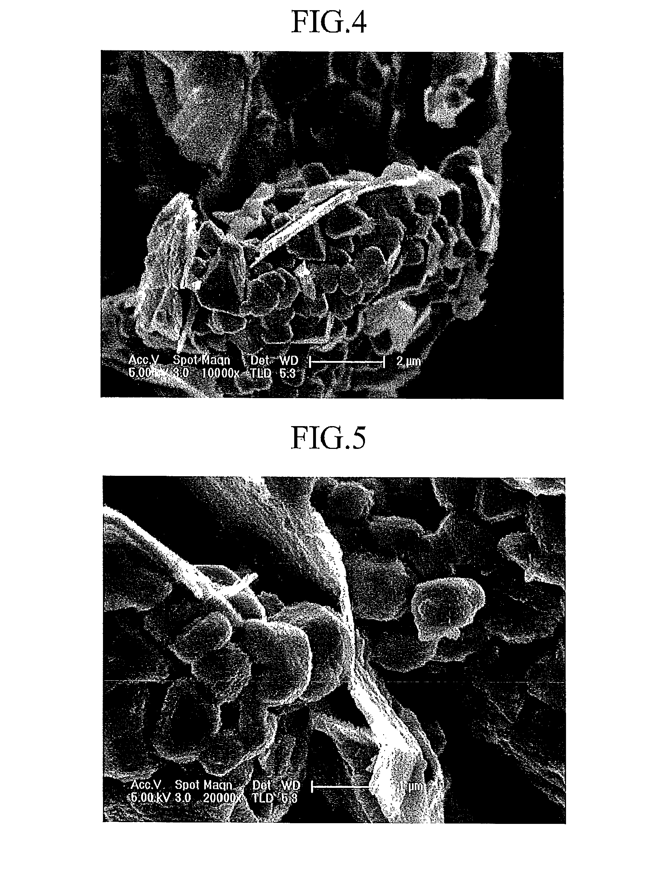

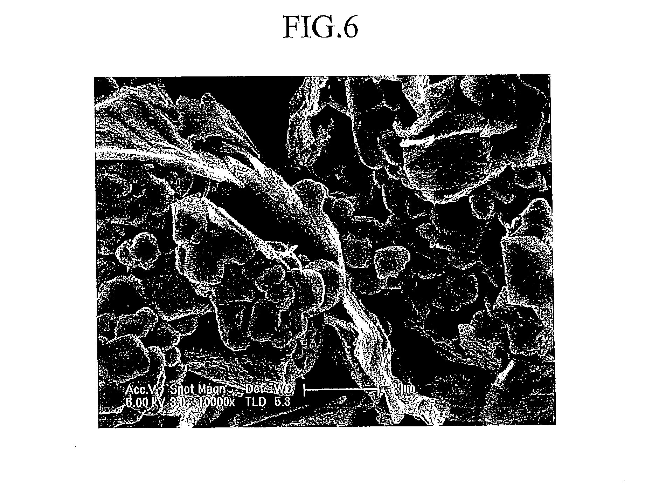

Figures 4, 5, and 6 provide SEM photographs of the positive active material according to Example 1. Figure 4 shows the positive active material at a magnification of 10,000, Figure 5 shows the positive active material at a magnification of 20,000, and Figure 6 shows the positive active material at a magnification of 10,000. These figures show that lithium iron phosphate (LiFePO₄) was chemically combined on the surface of the carbon sheet according to Preparation Example 1 and thus, produced and grew a nucleus thereon.

### Cell Performance

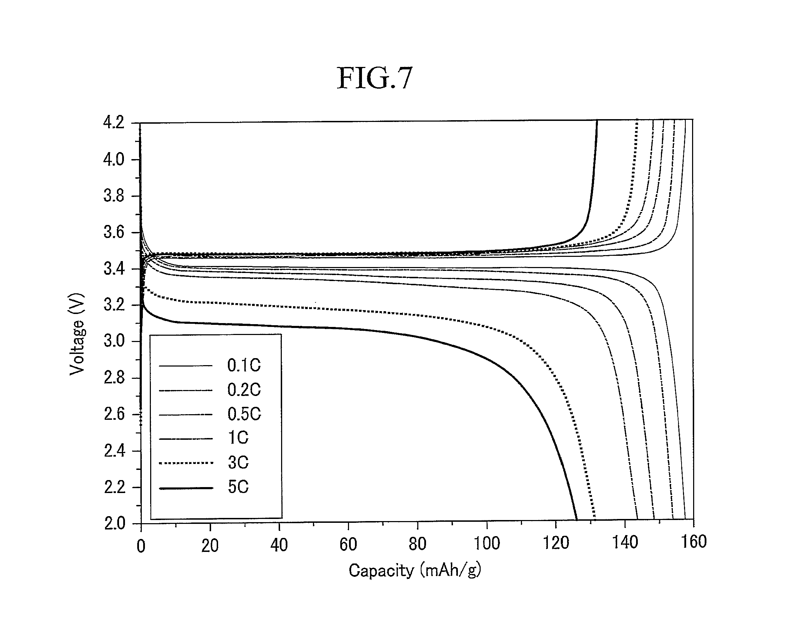

Figure 7 is a charge and discharge graph of a battery cell according to Example 1. The graph shows that the lithium iron phosphate of the positive active material according to Example 1 has low electrical conductivity and ion conductivity but has a strong bond with carbon and thus, improved electrical conductivity. The lithium secondary battery cell was charged and discharged with 5C, with the current density 50 times higher than the case of 0.1C. As shown in the graph, the battery cell had excellent performance despite rapid charge and discharge rate.

### Cell Performance: Charge and Discharge Experiment

The coin cells according to Example 1 and Comparative Example 1 were studied regarding charge and discharge. The results are provided in the following Table 1. The experiment was performed with the following equipments under the following conditions.

The cells were respectively once charged and discharged with 0.1C, 0.2C, 0.5C, 1C, 3C, and 5C at 25°C of a room temperature. They had a cut-off voltage ranging from 2.0 to 4.2V.

Each material had discharge capacity as provided in the following Table 1.

**Table 1**

| | Comparative Example 1 | Example 1 |
|---|---|---|
| 0.1C discharge capacity (mAh/g) | 156 | 158 |
| 0.2C discharge capacity (mAh/g) | 150 | 154 |
| 0.5C discharge capacity (mAh/g) | 142 | 148 |
| 1C discharge capacity (mAh/g) | 134 | 143 |
| 3C discharge capacity (mAh/g) | 122 | 132 |
| 5C discharge capacity (mAh/g) | 108 | 127 |

The cell according to Example 1 had excellent cell performance in terms of rate discharge capacity, when compared with the comparative example, as shown in Table 1.

Whilst the present invention has been described in connection with certain exemplary embodiments thereof, it is to be understood that the invention is not limited to the disclosed embodiments, but, on the contrary, is intended to cover various modifications and equivalent arrangements included within the scope of the appended claims.

## Claims

1. A positive active material for a lithium secondary battery comprising:
a carbon sheet having a structure comprising from 1 to 200 polycyclic nanosheets comprising a plurality of hexagonal rings each having six carbon atoms wherein the hexagonal rings are condensed and substantially aligned in a plane containing the hexagonal rings,
wherein the polycyclic nanosheets are layered in a direction perpendicular to the plane containing the hexagonal rings, and
particles of an olivine compound disposed on the surface of the carbon sheet,
wherein the olivine compound particles comprise a compound represented by the following Chemical Formula 1:
LiₓM_{z}PO₄ [Chemical Formula 1]
wherein 0<x≤2, 0.8≤z≤1.2, and M is at least one selected from the group consisting of Sc, Ti, V, Cr, Mn, Fe, Co, Ni, Cu, or a combination thereof.

2. The positive active material of Claim 1, wherein the carbon sheet and the olivine compound particles share at least one lattice phase.

3. The positive active material of Claim 1, wherein the positive active material comprises the carbon sheet in an amount from 1 wt% to 15 wt% of the positive active material.

4. The positive active material of Claim 1, wherein M is at least one selected from the group consisting of Fe, Mn, Co, Ni, Cu, or a combination thereof.

5. The positive active material of Claim 1, wherein the carbon sheet has a plate or planar shape.

6. The positive active material of Claim 1, wherein the polycyclic nanosheet has a thickness of from about 0.846 nm to about 1.154 nm.

7. A lithium secondary battery comprising:
a positive electrode comprising a positive active material according to any of claims 1 to 6,
a negative electrode,
a separator; and
an electrolyte.

8. The lithium secondary battery of Claim 7, wherein the current collector is Al.

9. A method of manufacturing a positive active material for a lithium secondary battery comprising:
mixing a carbon sheet with an Li source material, an M source material, and a P source material and with a solvent to form a mixed solution;
wherein the carbon sheet has a structure comprising from 1 to 200 polycyclic nanosheets comprising a plurality of hexagonal rings each having six carbon atoms, wherein the hexagonal rings are condensed and substantially aligned in a plane containing the hexagonal rings,
wherein the polycyclic nanosheets are layered in a direction perpendicular to the plane containing the hexagonal rings;
growing olivine compound particles on the surface of the carbon sheet in a liquid method, and
heat-treating the olivine compound particles under a reduction atmosphere; wherein the olivine compound particles comprise a compound represented by the following Chemical Formula 1:
LiₓM_{z}PO₄ [Chemical Formula 1]
wherein 0<x≤2, 0.8≤z≤1.2, and M is at least one selected from the group consisting of Sc, Ti, V, Cr, Mn, Fe, Co, Ni, Cu, or a combination thereof.

10. The method of Claim 9, wherein the liquid method comprises at least one of a precipitation method, a hydrolysis method, a solvent-evaporation method, a sol-gel method, a co-precipitation method, and a hydrothermal synthesis method.

11. The method of Claim 9 or claim 10, wherein heat-treating the olivine compound particles under a reduction atmosphere is done at a temperature of from 400°C to 800°C.

12. Use of a positive active material according to any of claims 1 to 6 in a positive electrode of a lithium secondary battery.
